# EUROPEAN PATENT SPECIFICATION

(11) **EP 1 277 668 B1**
(45) Date of publication and mention of the grant of the patent: **18.01.2006**
(21) Application number: 02254750.9
(22) Date of filing: 08.07.2002
(51) Int. Cl.: B29D 5/10

(54) **Method for producing an interlocking fastener strip for a bag**
Verfahren zur Herstellung eines Ineinandergreifenden Profilleistenverschluss für einen Beutel
Procédé de fabrication d'une bande de fermeture à éléments profilés pour sachet

(30) Priority: 17.07.2001 JP 2001216947; 28.12.2001 JP 2001399694
(43) Date of publication of application: 22.01.2003
(73) Proprietor: Japan Patent Management Co. Ltd., Tokyo (JP)
(72) Inventor: Kawai, Nobuyuki, Owariasahi-shi, Aichi-ken (JP); Fukumori, Hirotsugu, Yokohama-shi, Kanagawa-ken (JP); Amano, Hirozo, Kasugai-shi, Aichi-ken (JP); Morikawa, Nobuhiko, Komaki-shi, Aichi-ken (JP); Nakajima, Kazuhiko, Aichi-gun, Aichi-ken (JP); Fujioka, Satoshi, Magoya-shi, Aichi-ken (JP)
(74) Representative: King, James Bertram

(56) References cited:
- EP-A- 0 339 324
- EP-A- 0 760 340
- FR-A- 2 221 263
- US-A- 4 698 118
- US-B1- 6 174 397

## Description

This invention relates to a method of producing a re-sealable closure tape which, in use, is bonded to the inside mouth of a bag used for packaging. The tape more specifically has one strip part with a longitudinally extending male protrusion and a second strip part with a complementary longitudinally extending female receptacle, the male protrusion and female receptacle being mutually engaged by pressing together along their lengths to form a closure between the strips. The closure tape is often referred to as a "zipper tape" in view of the sliding nature of the engagement.

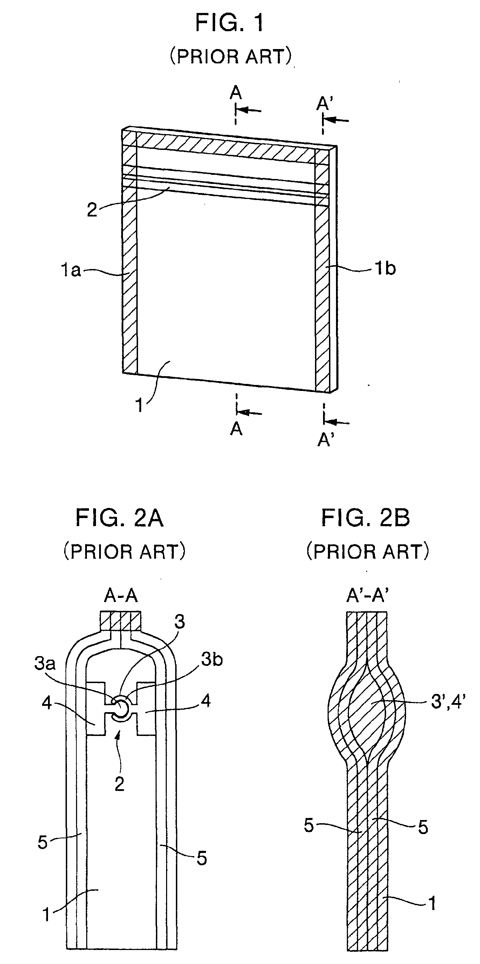

Bags for packaging with a closure tape are common and can easily and repeatedly be opened and closed. The conventional type of closure tape shown in Figs. 1, 2 and 3 of the drawings also disclosed in EP 0339324A1 (Prior Art) is generally based on a polyethylene system or a polypropylene system, and a male strip and a female strip forming a pair are used to form a mating section and are integrally formed on a tape. The tape is cut along a centre line thereof to provide a section with a male strip and a section with a female strip. When this closure tape is bonded in use to a bag 1 for packaging as shown in Fig. 1, a tape section 4 with a male strip 3a and a female strip 3b formed thereon is based on a polyethylene system when a plastic used for an innermost layer 5 of a bag 1 for packaging is a polyethylene-based one, while the tape section 4 is based on a polypropylene system when the plastic for the innermost layer 5 is a polypropylene-based one.

However, the conventional type of closure tape has the following defects:
a) When the closure tape 2 is produced by means of miscellaneous shape extrusion moulding, the male strip 3a and the female strip 3b are respectively formed on the tape section 4 in an integrated state therewith as shown in Fig. 2(A), and in this production method, it is impossible to mould a plurality of male strips and a plurality of female strips simultaneously in batch, and the two types of strips are formed only as a pair by means of extrusion moulding, so that the productivity is low.
b) When the closure tape 2 is bonded to the bag 1 for packaging, when the innermost layer 5 of the bag 1 and the tape section 4 of the closure tape 2 are jointed to each other by pressure and heating from the outside as shown in Fig. 2(A) there is the risk that the tape section 4 itself may be fused, so that there is no way but to make the thickness of the tape section 4 larger.
c) Because of the requirement described above, when pressure and heat are applied from the outside for making side seals 1 a, 1 b of the bag 1 for packaging as shown in Fig. 2 (B), the mating section 3 and the tape section 4 form together a fused plastic block 3', 4', and the section expands, so that the pressure and heat required for sealing must be high, which causes other sealed sections to be heated excessively. On the contrary, when the pressure and heat used for sealing are low, the plastic block 3', 4' is not fully fused and pin holes are often generated therein.
d) The closure tape 2 comprising the mating section 3 made from a polyethylene-based plastic and the tape section 4, as the innermost layer 5 of the bag 1 for packaging is thermally fused only with a polyethylene-based bag, so that the closure tape 2 can not be used for a bag made from a polypropylene-based plastic. On the other hand, a closure tape 2 made from a polypropylene-based plastic can not be used for a bag 1 made from a polyethylene-based plastic, and therefore the closure tape 2 must be selected according to a material used for forming the innermost layer 5 of the bag 1.

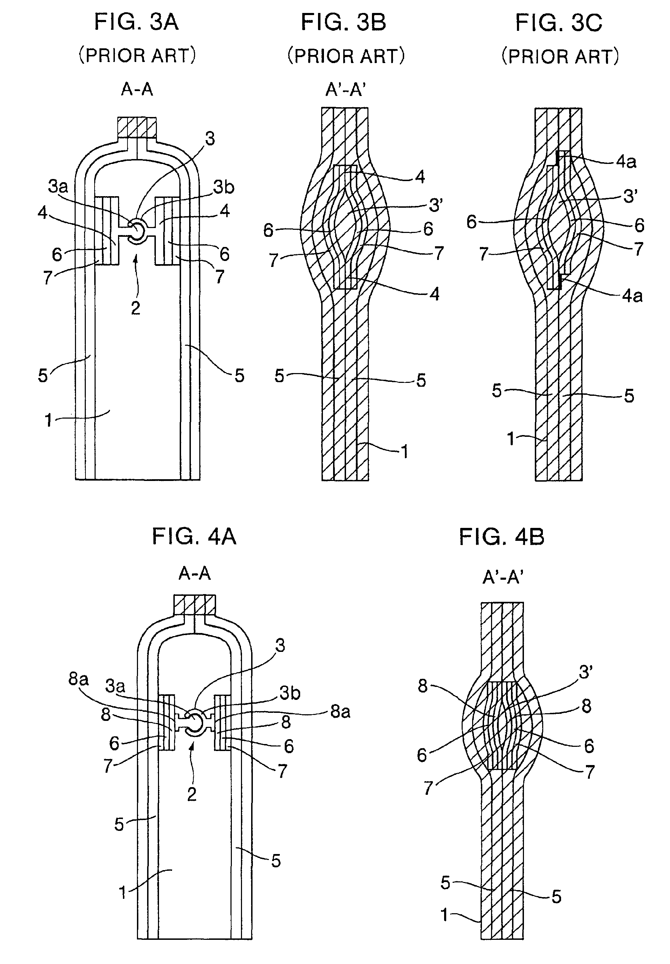

Improved types of closure tapes have been proposed for the purpose of solving the problems as described above. An example is disclosed in EP 0760340A1. As the most representative technology, there is the technology in which a heat-insulating film 6 having a melting point higher than that of the tape section 4 is laminated on the tape section 4 of the closure tape 2 and further a film 7 for thermal fusion having a melting point lower than that of the heat-insulating film 6 is laminated on the heat-insulating film 6 (Japanese Patent No. 1908600). In the closure tape 2, which is applied to the bag 1 for packaging shown in Fig. 1, the cross section A-A is as shown in enlarged form in Fig, 3(A), while the cross section A'-A' is as shown in enlarged form in Fig. 3(B).

With this improved type of closure tape 2, some of the problems in the conventional technology have been solved, but the following problems still exist:
e) When the closure tape 2 is produced by means of the miscellaneous shape extrusion moulding, the male strip 3a and the female strip 3b are formed integrally on the tape section 4 respectively, so that there is no way other than to form the two types of strips in a pair and in a row, so that the productivity is not improved.
f) When the innermost layer 5 of the bag 1 and the thermally-fused film 7 of the closure tape 2 are pressed to each other and heated for sealing, the risk that the tape sections 4 facing each other are thermally fused to each other is avoided because of the presence of the heat-insulating film 6 as shown in Fig. 3(A), and this improvement advantageously makes it possible to reduce the total thickness of the tape section 4, heat-insulating film 6, and thermally fused film 7 down to about 100 µ.
g) When the side seals 1 a, 1b are made in the bag 1, the thickness of the fuses plastic block 3', 4', where the mating section 3 and the tape section 4 are integrated to each other, is reduced in proportion to the reduced thickness of the tape section 4 as shown in Fig. 3(B), but the reduction in thickness is still insufficient.
h) In the case of the closure tape 2 made from a polyethylene-based plastic, also the thermally fused film 7 and the innermost layer 5 of the bag 1 must be made from the polyethylene-based plastic, and further in the case of the closure tape 2 made from a polypropylene-based plastic, also the thermally fused film 7 and the innermost layer 5 of the bag 1 must be made from the polypropylene-based plastic, and this technological limitation still remains unsolved.
i) In the conventional type of closure for a bag, two sheets of base tapes to be sealed on an inner surface of the bag, and the male strip and the female strip respectively formed on this base tape are integrally formed by an extrusion moulding machine. Because of this requirement, when it is desired to give a specific colour to the closure tape for the purpose to indicate that the closure tape is joined or attached to inside of an upper open section of the bag or to make the closure tape colourful, it is necessary to add a colouring material to a plastic used as a material for the tape and to extrude the coloured plastic from the extrusion moulding machine.
j) For the reason described above, it is possible to give a specific colour to the closure tape as a whole, but it is impossible to give a colour only to the male and female strips, nor to give different colours to the mating section and base tape respectively, and therefore when designing a bag with a closure, options in designing the closure section are disadvantageously limited as compared to those allowable in other sections.
k) Further, once the closure tape has been set in an upper open section of a bag, only a surface of the base tape and the mating section can directly be checked visually, and it is impossible , because of the presence of the mating section, to print on the closure tape an alerting message such as, for instance, that "If the closure tape colour has not changed to blue, please check and confirm again that the closure tape has completely been closed" for alerting a user as to whether the mating section has been completely closed.

It is a first object of the present invention to provide a method of producing a closure tape with a larger width and allowing formation of a plurality of pairs of male strips and a female strips each pair extending in a row on the closure tape.

It is a second object of the present invention to provide a method of producing a closure tape making it possible to reduce the size of a fused plastic block, which is generated at the mating section when side sealing for the bag is made, as much as possible to prevent generation of pin holes therein and also insuring good appearance of the bag.

Further it is a third object of the present invention to provide a method of producting a closure tape compatible with an innermost layer of a bag regardless of whether the innermost layer is made from a polypropylene-based plastic or a polyethylene-based plastic and also capable of eliminating the necessity of selecting a closure tape made from the same material as that used for an innermost layer of the bag.

It is a fourth object of the present invention to provide method of producing a closure tape for a bag allowing printing of any letters and figures or the like with any colour on a surface of the base tape.

It is a fifth object of the present invention to make it possible for a user of a bag to visually determine that a closure tape has been fitted to inside of an upper open section of the bag by printing thereon a remark indicating presence of the closure tape or giving any specific colour to the closure tape.

It is a sixth object of the present invention to improve the value of a product packaged in a bag for the purpose to contribute to increase of sales in the market by making it possible to make a surface of the bag more colourful especially in the section where the closure tape is fitted to the bag.

Accordingly this invention provides a method for the production of a closure tape for the mouth of a bag, the tape having a male strip and a female strip each formed with a mutually engaging mating section and carried on a respective base tape, the closure tape being such that each base tape comprises at least three layers including a thermally fusible film which may be heat sealed onto an innermost layer at the mouth of the bag, a heat insulating film having a higher melting point than that of the thermally fusible film and laminated onto the surface of the thermally fusible film, a thermally fused film forming the mating section laminated onto a surface of the heat-insulating film with the extruded male strip and a female strip thermally fused and bonded to a surface of the thermally fused film and forming the closure, in which method the base tape material comprises a laminated sheet wound up in a roll, the base tape material being fed out from the roll and fused and bonded with male strips and female strips as they are extruded in spaced side by side relationship from an extrusion moulding machine, the base tape with the bonded male and female strips thereon being cut into tapes having a male strip and a female strip which are mated progressively to form the closure tape, each closure tape thus formed being wound up.

This invention is further described an illustrated with reference to the drawings showing embodiments of the invention and with reference to examples.
Fig. 1 (prior art) is a view of a bag with a conventional type of closure tape fitted therein;
Fig. 2(A) (prior art) is a cross-sectional view taken along the line A-A of Fig. 1;
Fig. 2(B) (prior art) is a cross-sectional view taken along the line A'-A' of Fig. 1;
Fig. 3(A) (prior art) is a cross-sectional view taken along the line A-A of Fig. 1 showing a bag using the conventional type of closure tape consisting of three tape sections;
Fig. 3(B) (prior art) is across-sectional view taken along the line A'-A' of Fig. 1 showing a plastic block in a side heat seal section;
Fig. 3(C) (prior art) is an explanatory view showing the condition where pin holes have been generated;
Fig. 4(A) is a cross-sectional view showing a portion of a bag with a closure tape made according to the method of the present invention, the portion being a similar section to that indicated by the line A-A in Fig. 1;
Fig. 4(B) is a view showing a plastic block in the side seal section indicated by the line A'-A' in Fig. 1;
Fig. 5(A) is a cross-sectional view showing a portion of the closure tape, the portion indicated by the line A-A in Fig. 1;
Fig. 5(B) is a section view indicated by the line A'-A' in Fig. 1 showing the state where the tape section is out of alignment in the side seal;
Fig. 6 is a diagram showing the method of producing a further closure tape made according to the method of the present invention;
Fig. 7 is a view showing a shape extrusion moulding machine;
Fig. 8 is a view showing a slitter section;
Fig. 9 is a view showing the closure tape made according to the method of the present invention;
Fig. 10 is a view showing the closure tape fitted to the inside of an open section of a bag;
Fig. 11 is a view showing an open section of a bag with a closure closed by means of heat sealing;
Fig. 12 is a view showing a method of producing the closure tape according to the present invention;
Fig. 13 is a view showing a method of producing a closure tape having a mating section with different colours according to the present invention; and
Fig. 14 is a view showing the state in which a male profile section and a female profile section are formed by using different extrusion moulding machines respectively.

A closure tape 2 has a male strip 3a and a female strip 3b which are different from the conventional prior art technology in that the tape is not moulded in an integrated state with a fused film 4 as in the prior art. As shown in Fig. 4(A) the base tape is produced with the male strip 3a and female strip 3b being extrusion-moulded and then fused to a film 8. The male and female strips 3a and 3b are thus fused and bonded at 8a to a surface of the film 8 forming the mating sections.

The reason for employment of the production sequence as described above is based on the fact that, when the closure tape 2 is fitted to the inside of an open section of a bag 1 and side seals 1 a, 1 b are made as shown in Fig. 1 (section A'-A') with the mating section 3 fused into a plastic block 3' by applying a pressure and heat thereto for sealing as shown in Fig. 4(B), the size of the fused plastic block 3' can be minimised without the generation pin holes and, in addition, the finish of the bag can be improved.

This invention is based on the discovery that when the closure tape 2 is formed by a shape extrusion moulding, different from the conventional technology in which the male strip 3a and female strip 3b are each integrated with the tape section 4, then it is easy to give a desired shape to the mating section 3 and in addition a plurality of pairs each of the male strip 3a and female strip 3b can be extrusion-moulded in rows simultaneously.

Further the productivity is substantially improved by making the mating sections 3 of the male strip 3a and female strip 3b using extrusion-moulding, then fusing and bonding the mating sections 3 to a wide film consisting of at least three previously laminated layers, slitting in the longitudinal direction to separate the male strips 3a and female strips 3b after the strips are cooled to mate the male strips with female strips one by one respectively to form the closure tapes 2, and by winding-up the closure tapes 2.

Another important technological factor of the present invention relates to choice of plastics used for the thermally fused film 7 and thermally fused film 8 for formation of a mating section each constituting a three-layered structure forming the closure tape 2 and comprising the thermally fused film 7 fused and bonded to an innermost layer of a bag, the heat-insulating film 6, and the thermally fused film 8 forming the mating section.

In the conventional technology, the innermost layer of a bag for packaging is made from either a polyethylene-based plastic or a polypropylene-based plastic, and the mating section 3 is also made from either one of the two types of plastics above. In the case of the mating section 3 made from a polyethylene-based plastic, as shown in Fig. 2 and Fig. 3, it is preferable, from the view point of the fused plastic blocks 3', 4' generated in the side seal sections 1 a, 1 b of the bag 1, that the polyethylene-based plastic is as soft as possible. In that case, however, the tape section 4 is formed in the integrated state with the mating sections and the tape section 4 is also made from the same plastic as that used in the mating section. If the innermost layer 5 of the bag 1 is made from a polypropylene-based plastic, the tape section is not thermally fused and bonded to the innermost layer 5 of the bag 1. This is seen from Fig. 2(A). In Fig. 3(A), if the thermally fused film 7 is made from a polypropylene-based plastic the fusion bonding of the thermally fused film 7 to a polypropylene-based plastic bag 1 with the innermost layer 5 made from a polypropylene-based plastic would be possible, but when the side seals 1a, 1 b are made in the bag 1 the opposing tape sections 4 are offset from the normal positions. The tape section 4 made from a polyethylene-based plastic directly contact the innermost layer 5 of the polypropylene-based plastic of the polypropylene-based plastic bag 1 as shown in Fig. 3(C), and fusion bonding can not be performed in the directly contacting section 4a without voids and pin holes being generated. Thus the polyethylene-based plastic tape section 4 can not be used for the polyethylene-based plastic bag 1. Even when the mating section 3 is made from a polypropylene-based plastic, it can not be used for the polyethylene-based plastic bag 1 for the same reason as described above.

For the reasons as described above, a second feature of the present invention is based on the requirement to produce all of the mating section 3, the thermally fused film 8 for formation of the mating section to which the male strip 3a and female strip 3b forming together the mating section 3 , and the thermally fused film 7 to be fused and bonded to the innermost layer 5 of the bag 1 from the same material using either a polypropylene-based plastic or a polyethylene-based plastic according to whether a plastic-made film corresponding to the innermost layer 5 of the bag 1 is made from a polypropylene-based plastic or a polyethylene-based plastic.

In addition, specific applications must be taken into consideration for the same technological reason. When a pharmaceutical product having a higher permeability, such as an anti-inflammatory analgesic agent, is packaged inside a bag with a closure, usually a film made from any of ethylene/acrylic acid copolymer (EAA) plastic, ethylene/metacrylic copolymer-based metal ion linked plastic (ionomer), and ethylene/metacrylic acid copolymer plastic (EMAA) is used for the innermost layer 5 of the bag 1 forming a packaging material which prevents permeation of the pharmaceutical component therethrough and resulting loss thereof.

Therefore, for the closure tape 2, it is necessary to use the same plastic as that used for the thermally fused innermost layer 5 of the bag 1 for the thermally fused film 7 to be fused and bonded to the innermost layer 5 of the bag 1 as well as the thermally fused film 8 for formation of the mating section and the mating section 3 itself.

As for the heat-insulating film 6, this heat-insulating film 6 is necessary, when sealing is performed by applying a pressure and heat from outside of the bag 1 with the closure tape 2 inserted between the innermost layers 5 of the bag 1 during the bag production process, to prevent the opposing thermally fused tapes 8 from being thermally fused and bonded to each other as shown in Fig. 4(A) and also to permit the fused plastic block 3' to be crushed under stable conditions by application of a pressure and heat from the outside when side seals 1a, 1 b of the bag 1 are made as shown in Fig. 4(B). A heat-resistant stretch film such as a biaxial stretching polyester film or biaxial stretching nylon film is preferable as a material for the heat-insulating film 6. Any type of film may be used so far as the film can satisfy the requirement for heat insulation.

A third feature of the present invention is based on a new technology for selection of a plastic to be used for the thermally fused film 7 to be fused and bonded to the innermost layer 5 of the bag 1 and the thermally fused film 8 for formation of a mating section to fuse and bond the mating section 3.

As shown in Fig. 4(A), it is necessary to select a polypropylene-based plastic or a polyethylene-based plastic as a material for the thermally fused film 7, which is to be fused and bonded to the innermost layer 5 of the bag 1, according to whether a material used for the innermost layer 5 of the bag 1 is a polypropylene-based plastic or a polyethylene-based plastic. An olefin-based film comprising a plastic in which, in addition to the polypropylene-based plastic and polyethylene-based plastic, an olefin-based plastic such as polybutene or a polystyrene-based plastic is mixed as a third component therein, or a plastic in which, in addition to the ethylene acetate vinyl copolymer plastic and a polyethylene-based plastic, a plastic with an olefin-based reformer mixed therein is used as a third component and may be used as a material for the thermally fused film 8 for formation of a mating section to be fused and bonded to the mating section 3.

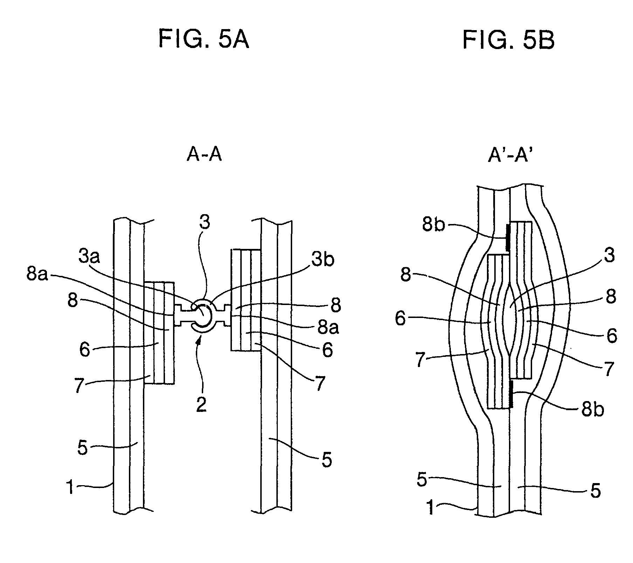

As the olefin-based film can advantageously be thermally fused and bonded to either a polypropylene-based plastic or a polyethylene-based plastic, and therefore it is not necessary to select a polypropylene-based plastic or a polyethylene-based plastic as the mating section 3 according to whether a material for the innermost layer 5 of the bag 1 is a polypropylene-based plastic or a polyethylene-based plastic. This makes it possible to use the polyethylene-based plastic which is softer and insures excellent finishing of a surface of the bag 1. Furthermore, when the side seals 1 a, 1 b of the bag 1 are to be made as shown in Fig 5(A) and (B), if the opposing thermally fused films 8 each for formation of a mating section are offset from each other, this olefin-based film 8 for formation of a mating section can thermally be fused and bonded to the innermost layer 5 of the bag 1 at a position 8b where the thermally fused film 8 contacts the innermost layer 5 of the bag 1 regardless of whether a material for the innermost layer 5 of the bag 1 is a polypropylene-based plastic or a polyethylene-based plastic, so that thermal fusion and bonding may be performed under stable conditions without pin hole generation.

In Fig.4(A) a fourth technological factor of the present invention relates to the further selection of a plastic to be used as a material for the film 7 to be thermally fused and bonded to the innermost layer 5 of the bag 1 and also for the thermally fused film 8 for formation of a mating section. In this aspect the present invention is characterised in that an olefin-based film comprising a plastic in which, in addition to the polypropylene-based plastic and the polyethylene-based plastic, an olefin-based resin such as polybutene or a polystyrene is mixed therein as a third component, or a plastic in which, in addition to the ethylene acetate vinyl copolymer plastic and a polyethylene-based plastic, a plastic with a olefin-based reformer mixed therein is used as a third component for the film 7 to be thermally fused and bonded to the innermost layer 5 of the bag 1 and also as the thermally fused film 8 for formation of a mating section.

The reason for employment of the olefin-based film is, as clearly understood from the above description, that any type of mating section 3, thermally fused film 7, heat-insulating film 6 and even the thermally fused film 8 for formation of a mating section can be used regardless of whether a material for the innermost layer 5 of the bag 1 is a polypropylene-based plastic or a polyethylene-based plastic.

Thus, the closure tape 2 made according to the method of the present invention can be used for a wide range of applications and types of the bag 1 and further it can substantially improve the productivity in production of closure tape 2 by allowing batch production of closure tapes 2.

### Example 1

A base tape with the width of 120 mm formed from a laminated structure consisting of a polyethylene film of 40 µm as the thermally fused film 8 for formation of a mating section, a stretch polyester film of 12 µm as the heat-insulating film 6, and a polyethylene film of 40 µm as the thermally fused film 7 to be thermally fused and bonded to the innermost layer 5 of the bag 1 was prepared. The male strip 3a and the female strip 3b each made from a polyethylene-based plastic were formed in five rows with a prespecified space therebetween by extrusion moulding using a profile extrusion moulding machine and were thermally fused and bonded to the thermally fused film 8 forming a mating section. After the temperature of the strips had reduced, the thermally fused film 8 was slit along each of the male strips 3a and female strips 3b to a width of 12 mm in the longitudinal direction, each male strip was mated with each female strip respectively with each pair wound up. Thus five strips of closure tapes 2 were produced simultaneously at a high productivity and of excellent quality.

### Comparative Example 1

The male strip 3a and the female strip 3b each made from a polyethylene-based plastic were produced respectively in an integrated state with the tape section 4 to form the closure tape 2 based on the conventional technology by means of extrusion moulding. Because of the necessity of giving a very complicated shape and form, the male strip 3a and the female strip 3b could be produced only in a pair and in a row, and it was extremely difficult to simultaneously produce the male strips and female strips in a pair and in a plurality of rows.

### Example 2

The closure tape 2 of Example 1 can be produced by extrusion-moulding only the male strip 3a and female strip 3b with high stability, and the weight of the mating section 3 can be reduced to a minimum level, which is a new effect provided by the present invention. The weight including that of the base tape section can be reduced to about 5 g/m.

The closure tape 2 made according to the method of the present invention was thermally fused and bonded to a film for production of bags comprising a polyester film of 12 µm, aluminium foil of 9 µm, and a polyethylene film of 60 µm along the longitudinal direction of each bag to be produced, and then side sections of the bag 1 were sealed by applying a pressure and heat thereto. As a result, the plastic block caused by the closure tape 2 was small, so that finishing of the side sections of the bag 1 was excellent and the appearance was good. In addition, no pin hole was generated, even if the male strip 3a was slightly off from the female strip 3b.

### Comparative Example 2

The closure tape 2 obtained in comparative Example 1 had to be produced by extruding a large quantity of plastic for the mating section 3 and the tape section 4 for achieving stability in the moulded state, so that the weight of the closure tape 2 was about 8 g/m.

This closure tape 2 was thermally fused and bonded to a film for production of bags comprising a polyester film of 12 µm, aluminium foil of 9 µm, and a polyethylene film of 60 µm along the longitudinal direction of each bag 1 to be produced. The side sections of the bag 1 were made by applying a pressure and heat thereto. As a result, the plastic block caused by the closure tape 2 was very large, so that finishing of the side sections of the bag 1 was not good and with a poor appearance. Further, when the male strip 3a was slightly offset from the female strip 3b, generation of pin holes was observed.

### Example 3

The closure tape 2 produced in Example 1 was thermally fused and bonded to a film for production of bags comprising a polyester film 12 µm, aluminium foil 9 µm, and a polyethylene film 60 µm and along the longitudinal direction of each bag to be produced. The side sections of the bag 1 were made by applying a pressure and heat thereto for sealing. As a result, the plastic block caused by the closure tape 2 was very small and was easily softened and crushed without heavy pressure, thus bags could be produced at the rate of 100 bags per minute without the aluminium foil being damaged.

### Comparative Example 3

The closure tape 2 produced in comparative Example 1 was thermally fused and bonded to a film for production of bags comprising a polyester film 12 µm, aluminium foil 9 µm, and a polyethylene film 60 µm along the longitudinal direction of each bag to be produced, and the side sections of the bag 1were made by applying a pressure and heat thereto for sealing. As a result, the plastic block caused by the closure tape 2 was large, and was slowly softened and hardly crushed, so that the load on the film for the formation of bags was large and cutting damage to the aluminium foil occurred at the frequency of 60 bags per minute.

### Example 4

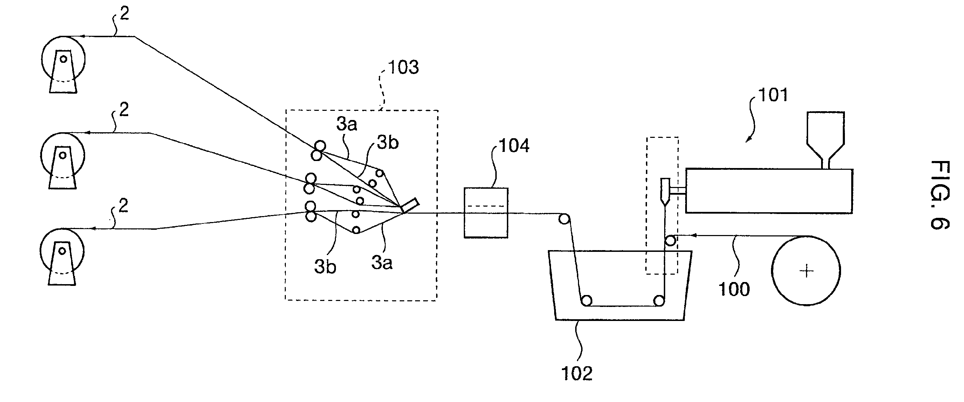

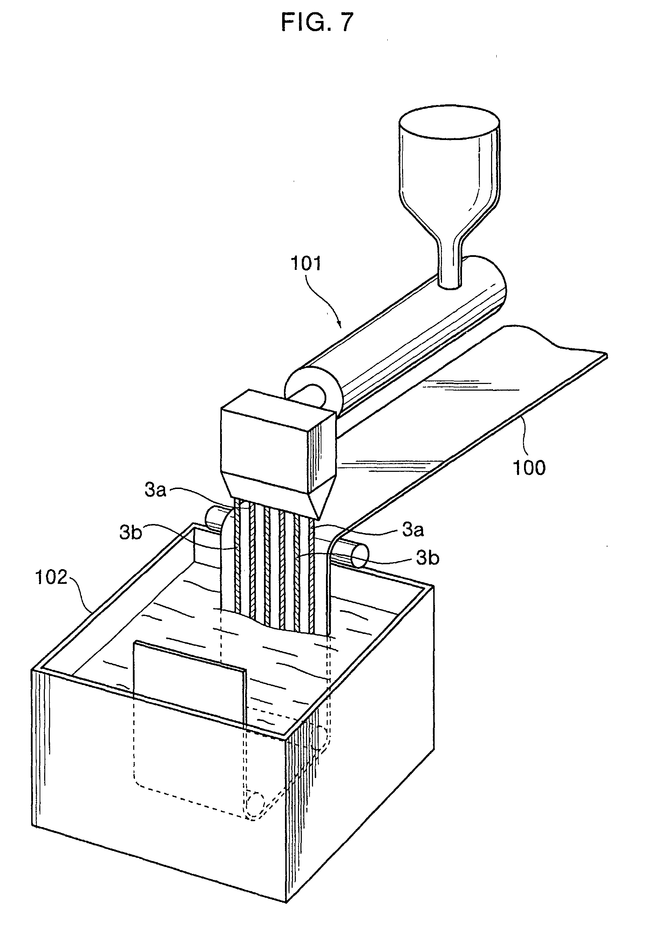

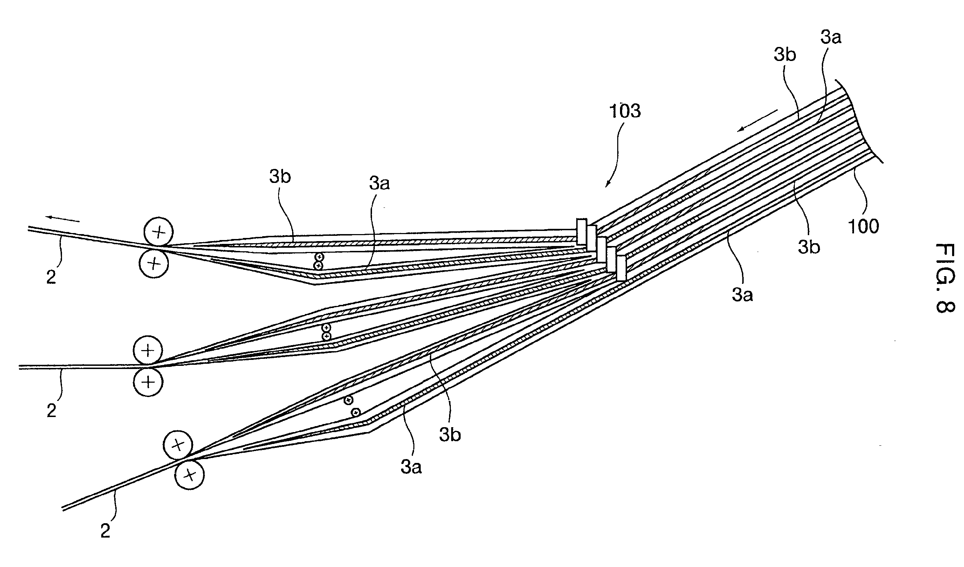

Example 4 relates to the method of producing the closure tape 2 and the general arrangement is shown in Fig. 6 with the mating section forming part shown in Fig. 7. The state where the male strip 3a and female strip 3b are mated with each other to produce the closure tape 2 is shown in Fig. 8. First, a base tape 100 for a wide film with a width of 72 mm based on a laminated structure consisting of an olefin-based film 50 µm (CMPS film produced by Tocello Kabushiki Kaisha) made from a plastic in which, in addition to a polypropylene-based plastic and a polyethylene-based plastic as the thermally fused film 8 for formation of a mating section, a polybutene-based plastic or the like is mixed therein as a third component, stretch polyester film 12 µm as a heat-insulating film 6, and a polypropylene film 40 µm as the thermally fused film 7 to be thermally fused and bonded to the bag 1 was previously prepared; male strips 3a and female strips 3b each made from a polyethylene-based plastic and forming a pair respectively are alternately moulded at a prespecified space therebetween in three rows with a miscellaneous shape extrusion-moulding machine 101, and the strips 3a and 3b thermally fused and bonded to the side of thermally fused film 8 of the base tape 100. After the male strip 3a and female strip 3b were cooled in a water bath 102, the male strips 3a and female strips 3b were cut out each with the width of 12 mm along the longitudinal direction of the base tape 100 with a slitter 103, and then the male strips 3a and female strips 3b were mated with each other one by one to form pairs and wound up, thus three strips of closure tapes were produced simultaneously. The reference numeral 104 in the figure indicates a drier.

This closure tape 2 was thermally fused and bonded to a film for formation of bags comprising a polyester film 12 µm and a polypropylene film 60 µm along the longitudinal direction of each bag 1 to be produced and the side sections of the bag 1 was made by applying a pressure and heat for sealing. As a result, when the innermost layer of the bag 1 was made from a polypropylene-based plastic, the bag 1 with the closure tape 2 having no sealing fault and excellent in sealing capability could be produced even when the mating section 3 was made from a polyethylene-based plastic.

### Comparative Example 4

An attempt was made to thermally fuse and bond the polyethylene-based closure tape 2 produced in Comparative Example 1 to a film for formation of bags with the innermost layer made from a polypropylene film, but the closure tape 2 could not be fused nor bonded to the bag film and therefore to enable thermal fusion and bonding, a bag with a closure could be produced only with the closure tape 2 made from a polypropylene-based plastic.

### Example 5

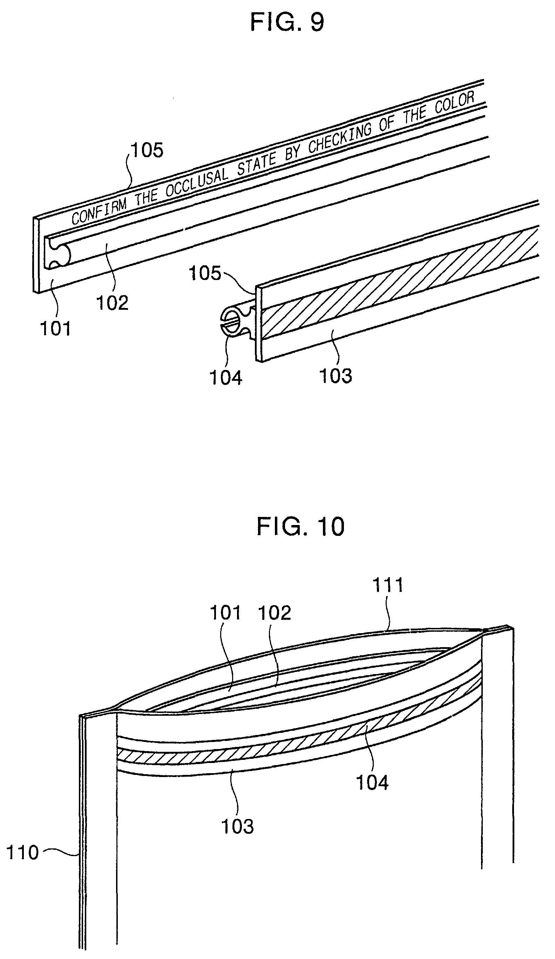

Referring to Fig. 9 this shows a closure tape made according to the method of the present invention and reference numeral 101 is a base tape, 102 a male strip thermally fused and bonded to a surface of the base tape 101, 103 a female strip side of the base tape, 104 a female strip thermally fused and bonded to a surface of the base tape 103. The male strip 102 and female strip 104 can be mated freely with each other or disengaged.

The base tape 101, 103 has a three-layered structure in this example and the outer layer (a layer which is heat-sealed to an inner surface of a bag) and an inner layer (a layer to which the male strip 102 and female strip 4 are thermally fused and bonded) are formed with a polyethylene-based plastic, while an intermediate layer inserted between the outer layer and the inner layer is made from a biaxial stretch polyester film. Both the male strip 102 and female strip 104 are made from a polyethylene-based plastic. It should be noted that these materials are only illustrative, and other types of films and plastics may be used according to the required function.

The reference numeral 105 indicates a remark printed on a surface of the male strip 102 side of the base tape 101 and in the female strip 104 side of the base tape 103 and indicating the necessity of "checking the closure state".

Fig. 10 shows the state in which the closure tape described above is fitted to inside of an upper open section 111 of a bag 110, and the base tapes 101, 103 in the male strip side and female strip side respectively are heat-sealed and facing inner surfaces of the open section 111 of the bag 110 by means of heat sealing. As indicated by the description above, a polyethylene film layer is formed for heat sealing on an inner surface of the bag 110 in this example.

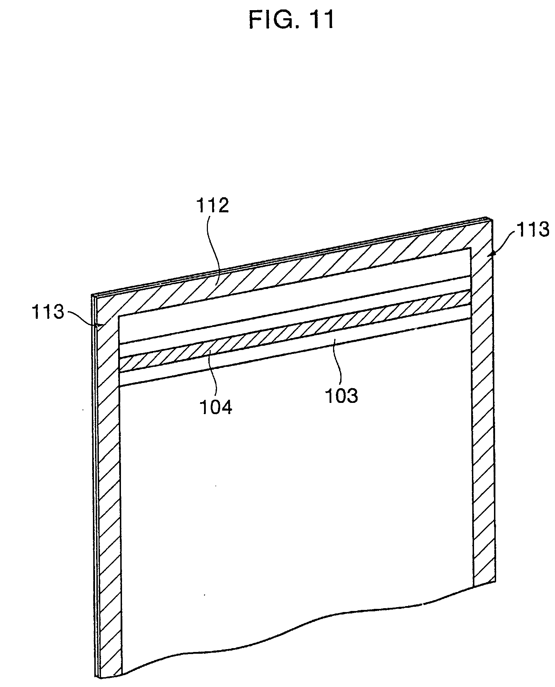

Fig. 11 is an explanatory view showing the state where the closure is closed and in addition the open section 111 of the bag 110 has been closed with a seal 112 by the heat sealing method after filling. The reference numeral 113 indicates a V-shaped nick which enables the top section 111 of the bag 110 to be opened as shown in Fig. 10.

As an indicator to check the mating state printing is provided on an inner surface of the base tape 101 or 103 (in the mating section), so that, when the open section 111 of the bag 110 is sealed again, the mating state can be checked to prevent leakage of the contents from the closure section.

By giving a specific colour to the base tape 101 or 103, the colour can visually be checked from the outside, and a user can easily recognise that the bag has a closure.

Further by using different colours for the base tape 101 and base tape 103 respectively, it is possible to freely design front and back sides of the bag 110 without being restricted by the closure.

By giving different colours to the male strip 102 and female strip 104 in the mating section respectively, it is possible for a user to visually check whether the two strips have been completely mated, or not, by checking changes in the colours.

### Example 6

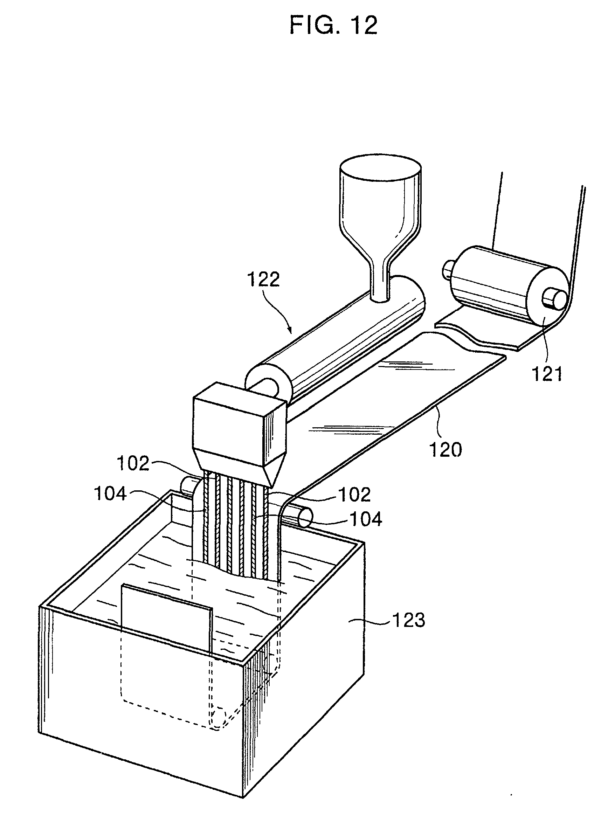

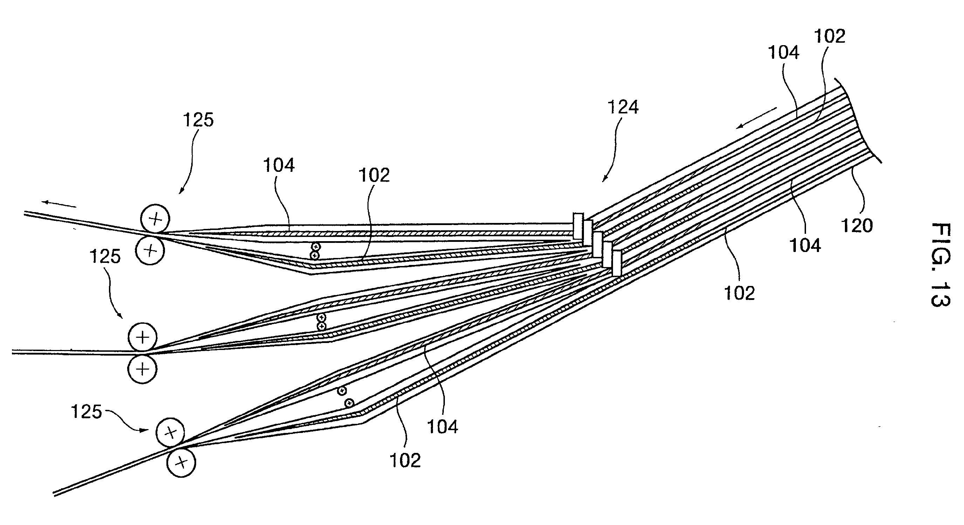

This example with reference to Fig. 12 shows the state where a closure tape is produced by extruding the male strips 102 and female strips 104 onto the wide base film 120 with an extrusion moulding machine. In Fig. 12, 120 is a base tape film before being split into the base tapes 101 and base tapes 103. This base tape film 120 is fed out from the roll, the wording 105 is printed by a cylinder 121 and then at the shape extrusion moulding machine 122, the male strips 102 and females strips 103 are alternately extruded from a die of the extrusion moulding machine 122. These male strips 102 and female strips 104 are thermally fused and bonded to the base tape film 120 and then cooled by water in a bath 123, and finally the base tape is slit along each strip by a slitter 124 as shown in Fig.13 and the adjoining male strips and female strips are mated with each other by a mating machine 125 and wound up.

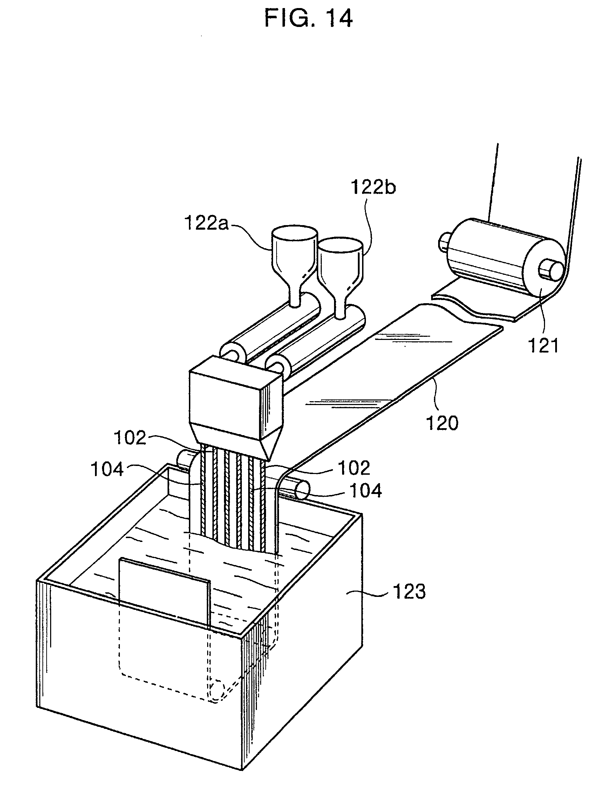

Fig. 14 shows a state where the male strips 102 and female strips 104 are coloured with different colours, and in this case, different extrusion moulding machines 122a and 122b are used for moulding the male strips 102 and female strips 104 respectively. Plastics with different colouring materials mixed therein are used in the extrusion moulding machines, so that the male strips 102 and female strips 104 can thermally be fused and bonded to the base tape 120.

### ADVANTAGES OF THE INVENTION

As described above the present invention differs from the conventional technology in which a male strip and a female strip are formed in the integrated state on a base tape of a closure tape in that a male strip and a female strip are formed by fusion bonding to a surface of a thermally fused film for formation of the mating section.

As a result the following advantageous effects are provided.
1. In the production of a closure tape, male strips and female strips can simultaneously be formed in a plurality of rows in the state where adjoining male strips and female strips form pairs respectively, so that the productivity is far higher as compared to the conventional technology in which a male strip and a female strip are formed in a pair.
2. In a side seal section where closure tapes are overlaid on each other when a bag is formed, a plastic block in the mating section including a thermally fused film for formation of the mating section is small, which insures excellent appearance of the bag.
3. Because the plastic block is small, it is possible to overcome the trouble caused by excessive heat applied in heat sealing, and in addition the bag production speed can be improved.
4. By using a specific plastic film which can be thermally fused and bonded to both a polypropylene-based film and a polyethylene-based film as a thermally fused film for formation of a mating section, for instance, it is possible to use a closure tape having a mating section made from polyethylene also for a bag with the innermost layer made from polypropylene.
5. By giving or printing specific colours, marks, or letters on the male strip and female strip it is possible to check from the outside the closure state of the closure in a bag in which at least the closure section is transparent or semitransparent.
6. As letters, marks, and colours can be given or printed in the mating section side of the base tape, this printed letters or marks can visually show when the closure tape is open, and a remark or the like can conveniently be printed on a surface of the base tape.
7. By using different colours for a male strip and a female strip forming a mating section, the mated state can visually be checked when the two strips are mated with each other.
8. By giving specific marks, patterns, or colours to an outer surface of the closure tape, colour design on the bag can be made even in the closure section.

This invention thus provides a method of making a zipper closure tape 2 which can be used with a variety of combinations of plastics materials and which can be printed or coloured. The closure tape 2 has a mating section 3 comprising the male strip 3a and the female strip 3b bonded separately onto a three-layered base tape laminate 6, 7, 8 with a heat-insulating film 6 as an intermediate layer, the thermally fusible film 7 which is thermally fused and bonded to one side of the heat-insulating film 6 and which can be thermally bonded to the bag 5, and a thermally fused film 8 bonded to the other side of the film 6. The male strips 3a and female strips 3b are extruded onto the surface of film 8 of the base tape laminate. The base tape laminate is then cut along each adjoining male strip 3a and female strip 3b which are then mated with each other and the resulting tape wound up to provide the zipper tape product for application to a bag.

## Claims

1. A method for the production of a closure tape (2) for the mouth of a bag (1) the tape having a male strip (3a) and a female strip (3b) each formed with a mutually engaging mating section (3) and carried on a respective base tape (4), the closure tape being such that each base tape comprises at least three layers (6, 7, 8) including a thermally fusible film (7) which may be heat sealed onto an innermost layer (5) at the mouth of the bag (1), a heat insulating film (6) having a higher melting point than that of the thermally fusible film (7) and laminated onto the surface of the thermally fusible film (7), a thermally fused film (8) forming the mating section (3) laminated onto a surface of the heat-insulating film (7) with the extruded male strip (3a) and a female strip (3b) thermally fused and bonded (8a) to a surface of the thermally fused film (8) and forming the closure, which method is **characterised in that** the base tape material (100) comprises a laminated sheet wound up in a roll, the base tape material being fed out from the roll and fused and bonded with male strips (3a) and female strips (3b) as they are extruded in spaced side by side relationship from an extrusion moulding machine (101), the base tape (100) with the bonded male and female strips thereon being cut into tapes having a male strip and a female strip which are mated progressively to form the closure tape, each closure tape thus formed being wound up.

2. A method for the production of a closure tape as claimed in claim 1, **characterised in that** letters, marks, colours or the like are printed on or applied to .one surface or both surfaces of the base tape.

3. A method for the production of a closure tape as claimed in claim 1 or 2, **characterised in that** a specific colour is given to the base tape.

4. A method for the production of a closure tape as claimed in claim 1 or 2 or 3, **characterised in in that** different colours are used for the male strip and female strip on the base tape.

5. A method for the production of a closure tape as claimed in any preceding claim, **characterised by** the steps of feeding out a base tape film with letters, marks, or colours printed or given thereon, and extruding the male strip and the female strip onto a surface of the base tape film and thermally fusing and bonding the strips to the surface of the base tape film.

6. A method for the production of a closure tape according to any preceding claim, **characterised in that** the extrusion moulding machine used for producing the male strips and female strips is charged with plastics having different colours the male and female strips being extruded onto the base tape film with different colours.

## Patentansprüche

1. Verfahren zur Herstellung eines Verschlussstreifens (2) für die Öffnung eines Beutels (1), mit einer Einsteckleiste (3a) und einer Aufnahmeleiste (3b), die jeweils mit einem Koppelabschnitt (3) versehen sind, an dem sie miteinander in Eingriff gehen, und auf einem jeweiligen Basisstreifen (4) angeordnet sind, wobei der Verschlussstreifen derart ausgelegt ist, dass jeder Basisstreifen mindestens drei Schichten (6, 7, 8) umfasst, einschließlich eines wärmeschmelzbaren Films (7), der mit einer innersten Schicht (5) an der Öffnung des Beutels (1) verschweißt werden kann, eines wärmeisolierenden Films (6), der einen höheren Schmelzpunkt als der wärmeschmelzbare Film (7) hat und auf die Oberfläche des wärmeschmelzbaren Films (7) auflaminiert ist, eines thermisch schmelzfixierten Films (8) zur Bildung des Koppelabschnitts (3), der auf eine Oberfläche des wärmeisolierenden Films (7) auflaminiert ist, wobei die extrudierte Einsteckleiste (3a) und eine Aufnahmeleiste (3b) auf eine Oberfläche des thermisch schmelzfixierten Films (8) thermisch schmelzfixiert und mit dieser verbunden (8a) sind und den Verschluss bilden, wobei dieses Verfahren **dadurch gekennzeichnet ist, dass** das Material (100) des Basisstreifens eine zu einer Rolle aufgewickelte Verbundfolie umfasst, wobei das Material des Basisstreifens von der Rolle herunter zugeführt und mit Einsteckleisten (3a) und Aufnahmeleisten (3b) bei deren Extrusion Seite an Seite im Abstand voneinander aus einer Extrusionsmaschine (101) heraus verschmolzen und verbunden wird; wobei der Basisstreifen (100) mit den darauf befindlichen verbundenen Einsteck- und Aufnahmeleisten zu Streifen mit einer Einsteck- und einer Aufnahmeleiste zerschnitten wird, die zur Bildung des Verschlussstreifens progressiv miteinander gekoppelt werden, wobei jeder derart gebildete Verschlussstreifen aufgewickelt wird.

2. Verfahren zur Herstellung eines Verschlussstreifens nach Anspruch 1, **dadurch gekennzeichnet, dass** Buchstaben, Zeichen, Farben oder dergleichen auf eine oder beide Oberfläche(n) des Basisstreifens aufgedruckt oder aufgebracht sind.

3. Verfahren zur Herstellung eines Verschlussstreifens nach Anspruch 1 oder 2, **dadurch gekennzeichnet, dass** dem Basisstreifen eine spezifische Farbe verliehen wird.

4. Verfahren zur Herstellung eines Verschlussstreifens nach Anspruch 1 oder 2 oder 3, **dadurch gekennzeichnet, daas** für die Einsteckleiste und die Aufnahmeleiste auf dem Basisstreifen unterschiedliche Farben verwendet werden.

5. Verfahren zur Herstellung eines Verschlussstreifens nach einem der voranstehenden Ansprüche, **gekennzeichnet durch** die Schritte des Zuführens eines Basisstreifenfilms mit darauf aufgedruckten oder vorgesehenen Buchstaben, Zeichen oder Farben, und Aufextrudieren der Einsteckleiste und der Aufnahmeleiste auf eine Oberfläche des Basisstreifenfilms und thermisches Verschmelzen und Verbinden der Leisten mit der Oberfläche des Basisstreifenfilms.

6. Verfahren zur Herstellung eines Verschlussstreifens nach einem der voranstehenden Ansprüche, **dadurch gekennzeichnet, dass** die zur Herstellung der Einsteck- und Aufnahmeleisten verwendete Extrusionsmaschine mit Kunststoffen in verschiedenen Farben beschickt wird, so dass die Einsteck- und Aufnahmeleisten in verschiedenen Farben auf den Basisstreifenfilms aufextrudiert werden.

## Revendications

1. Procédé de fabrication d'un ruban d'un ruban (2) de fermeture pour la bouche d'ouverture d'un sachet (1) le ruban ayant une bande mâle (3a) et une bande femelle (3b) formées chacune avec une section (3) d'accouplement par mise en prise mutuelle et portées sur un ruban (4) de base respectif, le ruban de fermeture étant tel que chaque ruban de base comprend au moins trois couches (6. 7. 8) comportant un film (7) thermofusible qui peut être thermoscellé sur une couche (5) extrême interne au niveau de la bouche d'ouverture du sachet (1), un film (6) thermo-isolant ayant un point de fusion plus élevé que celui du film (7) thermofusible et stratifié sur la surface du film (7) thermofusible, un film (8) thermofusionné formant la section (3) d'accouplement stratifié sur une surface du film (7) thermo-isolant avec la bande mâle (3a) extrudée et une bande femelle (3b) thermofusionnée et liée (8a) sur une surface du film (8) thermofusionné et formant la fermeture, lequel procédé est **caractérisé en ce que** le matériau (100) de ruban de base comprend une feuille stratifiée enroulée en un rouleau, le matériau de ruban de base étant délivré depuis le rouleau et fusionné et lié avec les bandes mâles (3a) et les bandes femelles (3b) lorsqu'elles sont extrudées dans une relation espacée côte à côte depuis une machine (101) de moulage par extrusion le ruban (100) de base avec les bandes mâles et femelles liées sur ce dernier étant coupé en rubans ayant une bande mâle et une bande femelle qui sont progressivement accouplées pour former le ruban de fermeture, chaque ruban de fermeture ainsi formé étant enroulé.

2. Procédé de fabrication d'un ruban de fermeture selon la revendication 1. **caractérisé en ce que** des lettres, des marques, des couleurs ou analogues sont imprimés ou appliqués sur une surface ou les deux surfaces du ruban de base.

3. Procédé de fabrication d'un ruban de fermeture selon la revendication 1 ou 2. **caractérisé en ce qu'**une couleur spécifique est donnée au ruban de base

4. Procédé de fabrication d'un ruban de fermeture selon la revendication 1. 2 ou 3, **caractérisé en ce que** différentes couleurs sont utilisées pour la bande mâle et la bande femelle sur le ruban de base.

5. Procédé de fabrication d'un ruban de fermeture selon l'une quelconque des revendications précédente, **caractérisé par** les étapes consistant à délivrer un film de ruban de base avec des lettres des marques, ou des couleurs imprimées ou données sur ce dernier et à extruder la bande mâle et la bande femelle sur une surface du film de ruban de base et à thermofusionner et lier les bandes sur la surface du film de ruban de base.

6. Procédé de fabrication d'un ruban de fermeture selon l'une quelconque des revendications précédentes, **caractérisé en ce que** la machine de moulage par extrusion utilisée pour produire les bandes mâles et les bandes femelles est chargée de plastiques ayant différentes couleurs, les bandes mâles et femelles étant extrudées sur le film de ruban de base avec différentes couleurs.
